# EUROPEAN PATENT APPLICATION

(11) **EP 4 830 816 A1**
(43) Date of publication of application: **28.10.2026**
(21) Application number: 26173653.2
(22) Date of filing: 21.04.2026
(51) Int. Cl.: B01D 53/94, B01J 23/63, B01J 35/00, B01J 35/57, F01N 3/035

(54) **CATALYZED PARTICULATE FILTER**

(30) Priority: 24.04.2025 JP 2025072645; 03.04.2026 JP 2026061690
(71) Applicant: MAZDA MOTOR CORPORATION, Hiroshima 730-8670 (JP)
(72) Inventor: TAKIZAWA, Tomoya, Fuchu-cho, Aki-gun, Hiroshima, 730-8670 (JP)
(74) Representative: Müller-Boré & Partner Patentanwälte PartG mbB

(57) **Abstract**

A catalyzed particulate filter (10) disposed in an exhaust passage (11) of an engine and configured to collect particulate matter in exhaust includes a carrier (10A) having a plurality of cells (12, 13) defined by porous partitions (15), an on-wall layer (22) that is formed on surfaces (15A, 15B) of the partitions (15) facing the cells (12, 13) and contains a first noble metal catalyst and a first support material made of one or two or more metal oxides, and an in-wall layer (24) that is provided on wall surfaces (16A) inside the partitions (15) and contains a second noble metal catalyst and a second support material made of one or two or more metal oxides. A ratio of a density of the first support material to a density of the second support material is 1.05 or more, preferably 1.13 or more and 1.50 or less.

## Description

### BACKGROUND OF THE INVENTION

### 1. Field of the Invention

The present disclosure relates to a catalyzed particulate filter.

### 2. Description of the Related Art

Exhaust emitted from an engine contains harmful components such as hydrocarbons (HC), carbon monoxide (CO), nitrogen oxides (NOx), and particulate matter (hereinafter also referred to as "PM") containing carbon as a main component. Since these harmful components cause air pollution, emission regulations have been progressively tightened.

As a method for reducing the amount of PM emissions, a method is generally used in which a filter is disposed in an exhaust passage to collect PM. In such a filter, a PM combustion catalyst is supported on a filter body, and when the amount of PM collected by the filter increases, the PM is removed from the filter by combusting the PM to regenerate the filter. In addition, it is common to also support an exhaust purification catalyst on the filter body to purify the above-mentioned HC, CO, NOx, and the like.

When such catalysts are provided in the filter, while PM combustion and the purification of HC, CO, NOx, and the like can be promoted, there is a problem that pressure loss of the filter increases due to the reduction in the flow path of the exhaust.

For example, International Publication No. 2020/203198 discloses a technique related to an exhaust purification filter including a wall-flow type filter base material having pores with relatively large pore diameters and an exhaust purification catalyst supported on the filter base material, in which the exhaust purification catalyst is supported in an unevenly distributed manner in a high-density layer having a relatively high density and a low-density layer having a relatively low density. International Publication No. 2020/203198 discloses that this configuration sufficiently ensures the flow path of the exhaust and ensures uniformity of the flow of the exhaust, and as a result, an increase in pressure loss can be suppressed.

### SUMMARY OF THE INVENTION

In a catalyzed particulate filter, an on-wall layer containing a catalyst may be provided on surfaces of partitions facing cells. While providing the on-wall layer improves PM collection performance, there is a problem that the pressure loss increases when the supported amount of catalyst in the on-wall layer is increased in order to enhance exhaust purification performance.

Accordingly, an object of the present disclosure is to achieve both high exhaust purification performance and low pressure loss in a catalyzed particulate filter including an on-wall layer.

To achieve the above object, an aspect of the catalyzed particulate filter disclosed herein is as follows:
A catalyzed particulate filter disposed in an exhaust passage of an engine and configured to collect particulate matter in exhaust, the catalyzed particulate filter including a carrier having a plurality of cells defined by porous partitions, an on-wall layer that is formed on surfaces of the partitions facing the cells and contains a first noble metal catalyst and a first support material made of one or two or more metal oxides, and an in-wall layer that is provided on wall surfaces inside the partitions and contains a second noble metal catalyst and a second support material made of one or two or more metal oxides, wherein a ratio of a density of the first support material to a density of the second support material is 1.05 or more.

Since the on-wall layer is included, PM is also captured by the on-wall layer, and PM collection performance of the catalyzed particulate filter is improved. According to this configuration, the ratio of the densities satisfies the above range; therefore, the density of the first support material of the on-wall layer is higher than the density of the second support material of the in-wall layer. Thus, an increase in the density of the on-wall layer suppresses clogging of pores in the on-wall layer and enables low pressure loss to be achieved. In addition, the increase in the density of the on-wall layer also enables an exhaust purification function in the on-wall layer to be improved. Thus, in the catalyzed particulate filter including the on-wall layer, it is possible to achieve both high exhaust purification performance and low pressure loss.

In the present specification, noble metal catalysts contained in the on-wall layer are collectively referred to as a "first noble metal catalyst", and noble metal catalysts contained in the in-wall layer are collectively referred to as a "second noble metal catalyst".

In the present specification, metal oxides constituting the first support material and the second support material may be simply referred to as "support materials". In the present specification, metal oxides (support materials) contained in the on-wall layer are collectively referred to as a "first support material", and metal oxides (support materials) contained in the in-wall layer are collectively referred to as a "second support material".

In the present specification, "density" of a support material means a density determined by dry density measurement using the constant volume expansion method described in experimental examples described later. That is, the "density" in the present specification can be regarded as a "true density" when a closed pore into which a gas cannot enter is absent in a sample of the support material subjected to the measurement, and can be regarded as an "apparent density" in which a volume of a closed pore is included in a sample volume when the closed pore is present.

The ratio may be 1.13 or more and 1.50 or less.

This configuration is advantageous for achieving both high exhaust purification performance and low pressure loss in the catalyzed particulate filter including the on-wall layer.

A total amount of the first support material and the second support material supported on the carrier may be 50 g/L or more and 300 g/L or less.

This configuration is advantageous for improving exhaust purification performance of the catalyzed particulate filter.

An amount of the first support material supported on the carrier may be 21.0 g/L or more and 50.0 g/L or less.

This configuration is advantageous for improving catalytic performance of the on-wall layer.

The on-wall layer may contain Rh as the first noble metal catalyst.

When the on-wall layer contains Rh as the first noble metal catalyst, catalytic performance of the on-wall layer can be improved.

The Rh may be supported on at least part of the first support material.

When the on-wall layer contains Rh as the first noble metal catalyst, catalytic performance of the on-wall layer can be improved. In particular, from the viewpoint of increasing the density of the on-wall layer, when metal oxides having a relatively high density, preferably a Ce-containing Zr-based composite oxide and a Ce-free Zr-based composite oxide, are employed as main components of the first support material, these metal oxides tend to promote metallic Rh formation, and therefore catalytic activity of Rh can be maintained at a high level.

The in-wall layer may contain Pd as the second noble metal catalyst.

When the in-wall layer contains Pd as the second noble metal catalyst, catalytic performance of the in-wall layer can be improved.

The Pd may be supported on at least part of the second support material.

When the in-wall layer contains Pd as the second noble metal catalyst, catalytic performance of the in-wall layer can be improved. In particular, from the viewpoint of reducing the density of the in-wall layer, when the second support material contains a metal oxide having a relatively low density, preferably an Al-based oxide, such a metal oxide, preferably an Al-based oxide, can highly disperse Pd and can suppress sintering of Pd to maintain catalytic activity at a high level.

The first support material may contain no Al-based oxide.

Since an Al-based oxide is a low-density material having a relatively low density, this configuration is advantageous for increasing the density of the first support material and reducing the density of the second support material.

The second support material may contain an Al-based oxide.

Since an Al-based oxide is a low-density material having a relatively low density, this configuration is advantageous for increasing the density of the first support material and reducing the density of the second support material.

At least one of the following may be satisfied: the first support material is made of a Ce-containing Zr-based composite oxide and a Ce-free Zr-based composite oxide; and the second support material is made of a Ce-containing Zr-based composite oxide, a Ce-free Zr-based composite oxide, and an Al-based oxide.

A Ce-containing Zr-based composite oxide, which is an oxygen storage/release material (oxygen storage capacity (OSC) material), stores oxygen under a lean atmosphere and releases oxygen under a stoichiometric or rich atmosphere. Therefore, when a catalyst layer contains a Ce-containing Zr-based composite oxide, even if an air-fuel ratio of the exhaust slightly fluctuates from stoichiometry, a stoichiometric atmosphere in which exhaust purification performance is easily exhibited tends to be formed, and harmful gas components such as HC, CO, and NOx are efficiently purified (an A/F window is expanded). A Ce-free Zr-based composite oxide contributes to maintaining excellent catalytic performance of a noble metal catalyst by releasing active oxygen by an oxygen exchange reaction without involving a valence change of metal ions. When at least one of the first support material and the second support material contains an OSC material and a Ce-free Zr-based composite oxide, this configuration is advantageous for improving catalytic performance of at least one of the in-wall layer and the on-wall layer.

The OSC material and the Ce-free Zr-based composite oxide are high-density materials, and the Al-based oxide is a low-density material. Preferably, by employing a configuration in which the first support material contains an OSC material and a Ce-free Zr-based composite oxide and does not contain an Al-based oxide, the density of the on-wall layer can be effectively increased. By employing a configuration in which the second support material contains an Al-based oxide, the density of the in-wall layer can be effectively reduced.

The first support material may be made of two or more metal oxides having different densities, and the density of the first support material may be represented by a weighted average of densities of the two or more metal oxides.

When the first support material contains a plurality of metal oxides having different densities, the weighted average of densities of the metal oxides is defined as the density of the first support material, and contents of the metal oxides can be thereby taken into consideration. Thus, the density of the first support material can be set with high accuracy.

The density of the first support material may be 5.40 g/cm³ or more.

According to this configuration, the density of the on-wall layer can be effectively increased.

A metal oxide constituting the first support material may have a density of 3.10 g/cm³ or more.

According to this configuration, since the density of the first support material can be increased, the density of the on-wall layer can be effectively increased.

The second support material may be made of two or more metal oxides having different densities, and the density of the second support material may be represented by a weighted average of densities of the two or more metal oxides.

When the second support material contains a plurality of metal oxides having different densities, the weighted average of densities of the metal oxides is defined as the density of the second support material, and contents of the metal oxides can be thereby taken into consideration. Thus, the density of the second support material can be set with high accuracy.

The density of the second support material may be 5.25 g/cm³ or less.

According to this configuration, the density of the in-wall layer can be effectively reduced.

As described above, according to the present disclosure, it is possible to achieve high PM collection performance, low pressure loss, and high exhaust purification performance.

### BRIEF DESCRIPTION OF THE DRAWINGS

Fig. 1 is a view illustrating a state where an example of a catalyzed particulate filter according to the present disclosure is disposed in an exhaust passage of an engine;
Fig. 2 is a front view of the filter in Fig. 1;
Fig. 3 is an enlarged cross-sectional view of a portion of the filter in Fig. 1;
Fig. 4 is an enlarged cross-sectional view of a portion of a partition in the filter in Fig. 3;
Fig. 5 is a graph showing a relationship between a density ratio and T50-NO in samples of Experimental Example A;
Fig. 6 is a graph showing a relationship between the density ratio and T50-CO in the samples of Experimental Example A;
Fig. 7 is a graph showing a relationship between the density ratio and T50-HC in the samples of Experimental Example A;
Fig. 8 is a graph showing a relationship between the density ratio and pressure loss ΔP in the samples of Experimental Example A;
Fig. 9 is a flowchart illustrating an example of a method for producing a catalyzed particulate filter;
Fig. 10 is an explanatory view of volume measurement by the constant volume expansion method;
Fig. 11 is a graph showing a relationship between pressure loss ΔP_{R} and pressure loss ΔP_{E};
Fig. 12 is a graph showing a relationship between T50-NO and T50-CO in the samples of Experimental Example A;
Fig. 13 is a graph showing a relationship between T50-NO and T50-HC in the samples of Experimental Example A;
Fig. 14 is a graph showing a relationship between T50-CO and T50-HC in the samples of Experimental Example A;
Fig. 15 is a graph showing a relationship between a total amount of noble metals and T50-NO in samples of Experimental Examples B to D;
Fig. 16 is a graph showing a relationship between the total amount of noble metals and T50-CO in the samples of Experimental Examples B to D; and
Fig. 17 is a graph showing a relationship between the total amount of noble metals and T50-HC in the samples of Experimental Examples B to D.

### DESCRIPTION OF THE PREFERRED EMBODIMENTS

Embodiments of the present disclosure will be described in detail below with reference to the drawings. The following description of preferred embodiments is substantially illustrative and is not intended to limit the present disclosure, applications thereof, or use thereof in any way.

### Catalyzed Particulate Filter

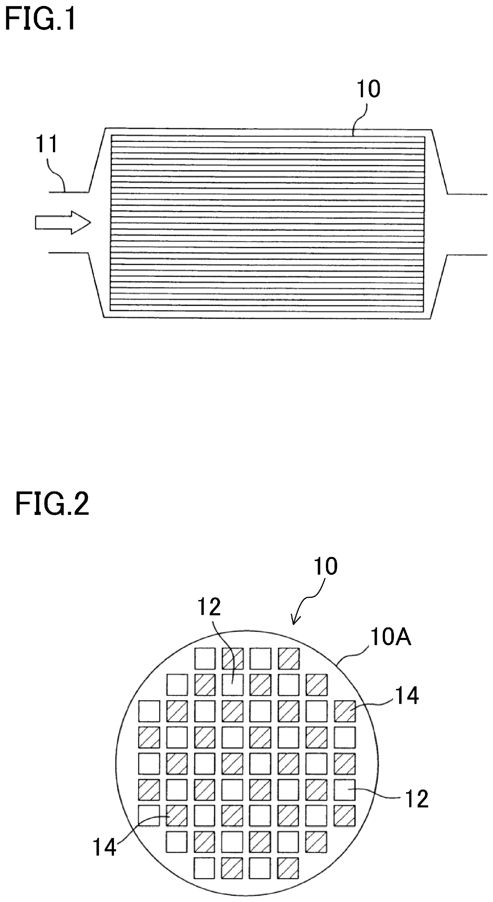

As illustrated in Fig. 1, a catalyzed particulate filter 10 (hereinafter also simply referred to as a "filter 10") is disposed in an exhaust passage 11 of an engine such as a diesel engine or a gasoline engine and collects PM in the exhaust. The filter 10 also has a function of purifying harmful gas components such as HC, CO, and NOx in the exhaust.

In the exhaust passage 11, another device other than the filter 10 may be disposed. Specifically, for example, the exhaust passage 11 upstream of the filter 10 in the flow of the exhaust may be provided with a catalytic converter (not illustrated) or the like for purifying the harmful gas components of the exhaust. Thus, since the harmful gas components can be purified by a two-stage configuration of the upstream catalytic converter and a catalyst on the filter 10, emission of the harmful gas components to the outside of the system can be effectively suppressed.

As illustrated in Figs. 2 to 4, the filter 10 includes a carrier 10A, an in-wall layer 24, and an on-wall layer 22. Carrier

The carrier 10A is not particularly limited as long as the carrier 10A has a plurality of cells defined by porous partitions, and may be a porous base material generally used for particulate filters. Specifically, the carrier 10A is, for example, a wall-flow type base material made of an inorganic porous material such as cordierite, SiC, Si₃N₄, sialon, or AlTiO₃. Here, a wall-flow type base material will be described as an example.

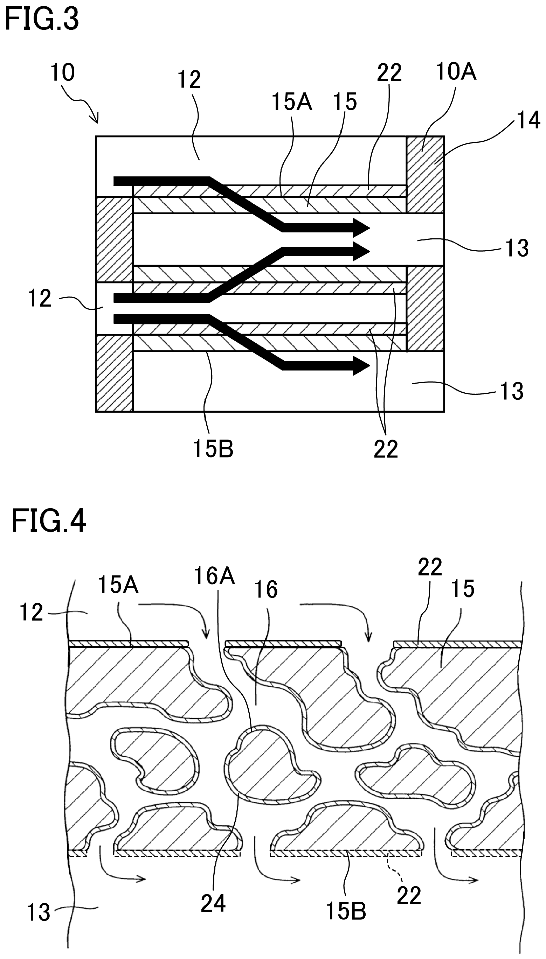

As schematically illustrated in Figs. 2 and 3, the carrier 10A has a honeycomb structure and includes a plurality of cells 12 and 13 extending in parallel to each other. The cells 12 each form an exhaust inflow passage having a downstream end closed by a plug 14. The cells 13 each form an exhaust outflow passage having an upstream end closed by a plug 14. The cells 12 and 13 are defined by thin, porous partitions 15 and are arranged alternately with one another. The hatched areas in Fig. 2 illustrate the plugs 14 at the upstream ends of the cells 13.

As indicated by the arrows in Figs. 3 and 4, the exhaust flowing into the cells 12 flows out into the adjacent cells 13 through pores 16 of the partitions 15. More specifically, as illustrated in Fig. 4, fine pores 16 that communicate between a cell 12 and a cell 13 are present inside a partition 15, and the exhaust passes through the pores 16. The PM in the exhaust is mainly captured and deposited on a wall surface 15A of the partition 15 facing the cell 12 (surface of a partition facing a cell) and wall surfaces 16A of the pores 16 (wall surfaces inside a partition).

From the viewpoint of effectively suppressing an increase in pressure loss while ensuring a high PM collection rate, a mean pore diameter D50 of the pores 16 inside the partitions 15 is, for example, 5 µm or more and 19 µm or less and may be 7 µm or more and 15 µm or less, 14 µm or more and 15.5 µm or less, or more than 14 µm and 15 µm or less.

### On-Wall Layer

As illustrated in Figs. 3 and 4, the on-wall layer 22 is formed on at least the wall surface 15A of the partition 15 facing the cell 12. The on-wall layer 22 may also be formed on a wall surface 15B of the partition 15 facing the cell 13 (surface of a partition facing a cell) as illustrated by the broken line in Fig. 4. The on-wall layer 22 contains a first noble metal catalyst and a first support material.

By providing the on-wall layer 22, the PM is also captured by the on-wall layer 22; therefore, the PM collection performance of the catalyzed particulate filter is improved. In particular, even when, for example, the pores 16 of the carrier 10A have a relatively large mean pore diameter D50, the PM collection rate can be effectively improved by providing the on-wall layer 22.

### First Noble Metal Catalyst

The first noble metal catalyst has a function as a PM combustion catalyst that promotes combustion of PM and a function as an exhaust purification catalyst that purifies harmful gas components such as HC, CO, and NOx contained in the exhaust, preferably a function as a three-way catalyst.

The first noble metal catalyst is not particularly limited, and a noble metal catalyst used as a generally known PM combustion catalyst and exhaust purification catalyst may be employed. Specific examples of the noble metal catalyst include Rh, Pd, and Pt.

The first noble metal catalyst is preferably used in a state of being supported on and/or doped into at least part of the first support material. The on-wall layer 22 may also contain, as part of the first support material, a metal oxide on which no noble metal catalyst is supported and/or into which no noble metal catalyst is doped. Such a metal oxide on which no noble metal catalyst is supported and/or into which no noble metal catalyst is doped functions as, for example, a co-catalyst.

The first noble metal catalyst is preferably at least one selected from the group consisting of Rh, Pd, and Pt, and more preferably at least one of Rh and Pd.

The first noble metal catalyst preferably contains Rh. The on-wall layer 22 preferably contains Rh in a larger amount than Pd in terms of mass ratio. Further, the on-wall layer 22 preferably contains Rh and does not contain Pd.

The Rh is preferably supported on and/or doped into at least part of the first support material, preferably supported on and/or doped into a CeZr-based composite oxide and/or a Zr-based composite oxide.

When the on-wall layer 22 contains Rh as the first noble metal catalyst, catalytic performance of the on-wall layer 22 can be improved. In particular, from the viewpoint of increasing the density of the on-wall layer 22, when a CeZr-based composite oxide and a Ce-free Zr-based composite oxide, which are high-density materials, are employed as main components of the first support material, these metal oxides tend to promote metallic Rh formation, and therefore, catalytic activity of Rh can be maintained at a high level. First Support Material

The first support material is made of one or two or more metal oxides. Examples of the metal oxide constituting the first support material include particles of an oxygen storage/release material (oxygen storage capacity (OSC) material) such as ceria, a Ce-based composite oxide, or a Ce-containing Zr-based composite oxide (also referred to as a "CeZr-based composite oxide"), a Ce-free Zr-based composite oxide (also simply referred to as a "Zr-based composite oxide"), an Al-based oxide, zirconia, or the like.

A Ce-containing OSC material stores oxygen in a lean atmosphere and releases active oxygen in a stoichiometric or rich atmosphere by reversible progression of a reaction involving a valence change of Ce. The active oxygen acts advantageously for PM combustion. In addition, for example, while the above-described noble metal catalyst has an increased NOx purification rate under a rich atmosphere, under a lean atmosphere, the catalyst metal is oxidized due to exposure to oxygen, the activity decreases, and the NOx purification rate decreases. Since an OSC material is contained, the OSC material adsorbs oxygen under a lean atmosphere, and therefore, oxidation of the catalyst metal can be suppressed to suppress a decrease in the NOx purification rate. Further, under a stoichiometric or rich atmosphere, oxygen adsorbed by the OSC material is desorbed and can be used for oxidation of HC and CO, which is advantageous for purifying HC and CO. That is, for example, in a three-way catalyst, due to the function of the OSC material, a stoichiometric atmosphere where exhaust purification performance is easily exhibited tends to be formed. Even if an air-fuel ratio of the exhaust slightly fluctuates from stoichiometry, harmful gas components such as HC, CO, and NOx are efficiently purified (an A/F window is expanded). Specific examples of such a CeZr-based composite oxide include a composite oxide of Ce and Zr, and a composite oxide of Ce, Zr, and a rare-earth element (such as Nd, La, Y, or Pr).

A Zr-based composite oxide has high ionic conductivity, takes in oxygen from the surroundings through an oxygen exchange reaction, and releases a large amount of active oxygen effective for PM combustion and purification of harmful gas components. Such a Zr-based composite oxide has a moderate oxygen release rate as compared with a CeZr-based composite oxide involving a valence change of Ce. Therefore, for example, a Zr-based composite oxide supporting Rh can suppress rapid oxidation of Rh even immediately after exhaust is switched from a lean atmosphere to a rich atmosphere. Thus, since Rh maintains an appropriate (not excessive) oxidation state or reduction state, NOx can be effectively purified. Specific examples of such a Zr-based composite oxide include a composite oxide of Zr and a rare-earth element other than Ce (such as Nd, La, Y, or Pr).

An Al-based oxide has a high specific surface area and is excellent in contact with exhaust, and is therefore advantageous for PM combustion and purification of harmful gas components. In addition, since such an Al-based oxide is excellent in heat resistance, durability of the on-wall layer 22 is improved. Specific examples of such an Al-based oxide include activated alumina such as La-containing alumina and pure alumina.

An Al-based oxide is a low-density material having a relatively low density. Accordingly, the content of the Al-based oxide in the first support material is preferably low. More preferably, the first support material does not contain an Al-based oxide. This is advantageous for increasing the density of the on-wall layer 22.

The first support material is preferably made of a CeZr-based composite oxide and a Zr-based composite oxide. The first support material containing a CeZr-based composite oxide and a Zr-based composite oxide is advantageous for improving catalytic performance of the on-wall layer 22. The CeZr-based composite oxide and the Zr-based composite oxide are high-density materials, and the Al-based oxide is a low-density material. A configuration in which the first support material contains a CeZr-based composite oxide and a Zr-based composite oxide and does not contain an Al-based oxide enables the density of the on-wall layer 22 to be effectively increased.

The mean particle diameter D50 of the first support material contained in the on-wall layer 22 is, for example, 5 µm or more and 10 µm or less, preferably 6 µm or more and 8 µm or less. This makes it difficult for a slurry for forming the on-wall layer 22 to enter the pores 16 inside the partitions 15, facilitates the formation of the on-wall layer 22 on the wall surfaces 15A, and promotes the capture of PM by the on-wall layer 22.

### Other Components

The on-wall layer 22 may contain, in addition to the above materials, other components such as a binder component and a catalyst poisoning inhibitor, e.g., an alkaline earth metal, as necessary. The other components are not particularly limited and may be components generally used for exhaust purification catalysts. The content of the other components in the on-wall layer 22 is not particularly limited and is appropriately determined according to the function and the like.

### In-Wall Layer

The in-wall layer 24 is provided on the wall surfaces 16A of the pores 16 inside the partitions 15 of the carrier 10A. The in-wall layer 24 contains a second noble metal catalyst and a second support material made of one or two or more metal oxides.

As the second noble metal catalyst, the same material as the first noble metal catalyst of the on-wall layer 22 can be used.

As the second support material, the same material as the first support material of the on-wall layer 22 can be used.

The second noble metal catalyst is preferably at least one selected from the group consisting of Rh, Pd, and Pt, and more preferably at least one of Rh and Pd.

The in-wall layer 24 preferably contains Pd. The in-wall layer 24 more preferably contains Pd in a larger amount than Rh in terms of mass ratio. The in-wall layer 24 still more preferably contains Pd and does not contain Rh.

The Pd is preferably supported on at least part of the second support material, preferably on an Al-based oxide.

When the in-wall layer 24 contains Pd as the second noble metal catalyst, catalytic performance of the in-wall layer 24 can be improved. In particular, from the viewpoint of reducing the density of the in-wall layer 24, the second support material preferably contains an Al-based oxide, which is a low-density material. In this case, Pd is preferably supported on the Al-based oxide. The Al-based oxide can highly disperse Pd and can suppress sintering of Pd to maintain catalytic activity at a high level.

The second support material preferably contains an Al-based oxide. Since such an Al-based oxide is a low-density material having a relatively low density, this is advantageous for reducing the density of the second support material.

The second support material is more preferably made of a CeZr-based composite oxide, a Zr-based composite oxide, and an Al-based oxide. The second support material containing a CeZr-based composite oxide and a Ce-free Zr-based composite oxide is advantageous for improving catalytic performance of the in-wall layer 24. The CeZr-based composite oxide and the Ce-free Zr-based composite oxide are high-density materials, and the Al-based oxide is a low-density material. By using an Al-based oxide as at least part of the second support material, the density of the in-wall layer 24 can be effectively reduced.

The mean particle diameter D50 of the second support material contained in the in-wall layer 24 is preferably 0.1 µm or more and 0.5 µm or less, and more preferably 0.1 µm or more and 0.4 µm or less. This enables the in-wall layer 24 to be efficiently formed on the wall surfaces 16A of the pores 16 inside the partitions 15.

The in-wall layer 24 may contain, as in the on-wall layer 22, other components other than the second noble metal catalyst and the second support material. As the other components, the same materials as those of the on-wall layer 22 can be used.

### Amounts of First Support Material and Second Support Material Supported

A total amount of the first support material and the second support material supported on the carrier 10A is, from the viewpoint of improving exhaust purification performance of the filter 10, for example, 50 g/L or more and 300 g/L or less and may be 80 g/L or more and 120 g/L or less, although not intended to be limiting.

An amount of the first support material supported on the carrier 10A is, from the viewpoint of ensuring high catalytic performance of the on-wall layer 22, for example, 21.0 g/L or more and 100 g/L or less and may be 21.0 g/L or more and 50.0 g/L or less, 25.0 g/L or more and 50.0 g/L or less, or 30.0 g/L or more and 45.0 g/L or less, although not intended to be limiting.

An amount of the second support material supported on the carrier 10A is, from the viewpoint of suppressing clogging of pores inside the partitions while ensuring high catalytic performance of the in-wall layer 24, for example, 20.0 g/L or more and 200 g/L or less and may be 25.0 g/L or more and 110 g/L or less, or 30.0 g/L or more and 65.0 g/L or less, although not intended to be limiting.

A ratio of the amount of the first support material supported to the total amount of the first support material and the second support material supported is, for example, 18 mass% or more and 80 mass% or less and may be 35 mass% or more and 70 mass% or less, or 38 mass% or more and 65 mass% or less, although not intended to be limiting.

A ratio of the amount of the second support material supported to the total amount of the first support material and the second support material supported is, for example, 20 mass% or more and 82 mass% or less and may be 30 mass% or more and 80 mass% or less, or 35 mass% or more and 75 mass% or less, although not intended to be limiting.

The amount of the first support material supported may be smaller than the amount of the second support material supported. In other words, the amount of the second support material supported may be larger than the amount of the first support material supported.

### Amount of Noble Metal Catalysts Supported

A total supported amount of the noble metal catalysts contained in the on-wall layer 22 and the in-wall layer 24, that is, a total amount of the first noble metal catalyst and the second noble metal catalyst supported, is preferably 0.80 g/L or more, more preferably 0.90 g/L or more and 3.00 g/L or less, and still more preferably 1.00 g/L or more and 2.50 g/L or less. Thus, exhaust purification performance of the catalyzed particulate filter can be effectively improved.

A total amount of Rh contained in the on-wall layer 22 and the in-wall layer 24 is, from the viewpoint of ensuring excellent catalytic performance of the filter 10, for example, 0.050 g/L or more and 2.0 g/L or less, although not intended to be limiting.

A ratio of a supported amount of Rh contained in the on-wall layer 22 to the total amount of Rh contained in the on-wall layer 22 and the in-wall layer 24 is preferably 40 mass% or more, and more preferably 50 mass% or more.

A total amount of Pd contained in the on-wall layer 22 and the in-wall layer 24 is, from the viewpoint of ensuring excellent catalytic performance of the filter 10, for example, 0.030 g/L or more and 3.0 g/L or less, although not intended to be limiting.

A ratio of a supported amount of Pd contained in the in-wall layer 24 to the total amount of Pd contained in the on-wall layer 22 and the in-wall layer 24 is preferably 50 mass% or more, and more preferably 80 mass% or more.

When the on-wall layer 22 and the in-wall layer 24 contain Rh and Pd, a ratio of Pd to Rh (Pd supported amount/Rh supported amount) is, for example, 3 to 11 in terms of mass ratio, and is preferably 4 to 10.

### Density

### Relationships between Density Ratio and Exhaust Purification Performance and between Density Ratio and Pressure Loss

In the filter 10 according to the present disclosure, a ratio P1/P2 (also referred to as a "density ratio") of a density P1 of the first support material to a density P2 of the second support material is 1.05 or more. This will be described below.

As a result of intensive studies, the inventors of the present application have found that there is a correlation between densities of the support materials contained in the on-wall layer 22 and the in-wall layer 24 and exhaust purification performance of the catalyzed particulate filter and between the densities and pressure loss of the catalyzed particulate filter.

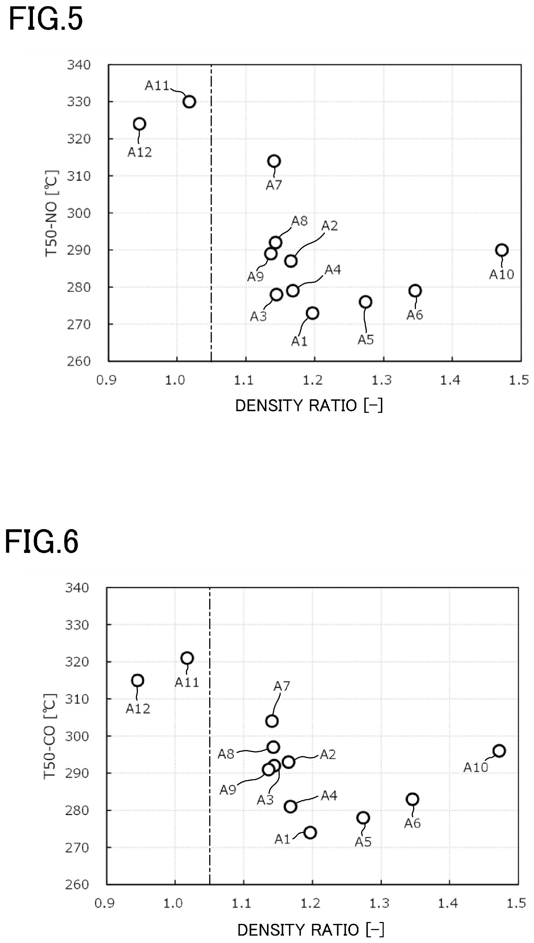

Specifically, Figs. 5 to 7 show relationships between the density ratio P1/P2 and light-off performance (T50) of NOx, CO, and HC, respectively, in PF samples of Experimental Examples A1 to A12 described later. As shown in Figs. 5 to 7, it is found that, when the density ratio is 1.05 or more (in the region on the right side of the one-dot chain line in each drawing), T50 of each of NOx, CO, and HC decreases as compared with the cases where the density ratio is less than 1.05.

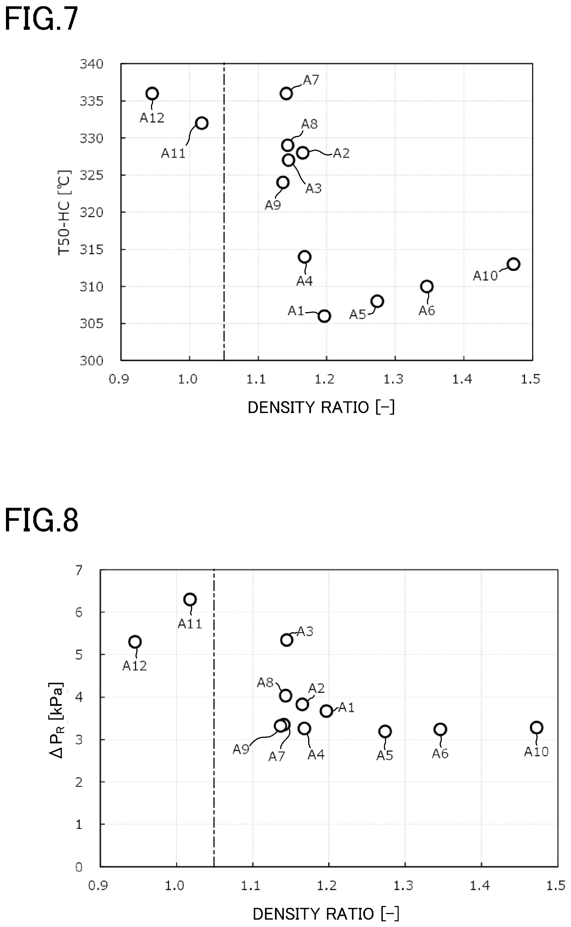

Fig. 8 shows a relationship between the density ratio P1/P2 and pressure loss AP_{R} in the PF samples of Experimental Examples A1 to A12. As shown in Fig. 8, it is found that, when the density ratio is 1.05 or more (in the region on the right side of the one-dot chain line in the drawing), the pressure loss ΔP_{R} also decreases as compared with the cases where the density ratio is less than 1.05.

As described later, for example, in the PF samples of Experimental Examples A1 and A7, a PM collection rate of 90% or more is also ensured.

Since the filter 10 according to the present disclosure includes the on-wall layer 22, PM is also captured by the on-wall layer 22, and thus PM collection performance is improved. Further, since the density ratio satisfies the above range, the density of the first support material of the on-wall layer 22 is higher than the density of the second support material of the in-wall layer 24. Thus, by increasing the density of the on-wall layer 22, clogging of pores in the on-wall layer 22 can be suppressed to achieve low pressure loss. In addition, by increasing the density of the on-wall layer 22, the exhaust purification function in the on-wall layer 22 can also be improved. Thus, in the filter 10 including the on-wall layer 22, both high exhaust purification performance and low pressure loss can be achieved.

The density ratio P1/P2 is preferably 1.13 or more and 1.50 or less, and more preferably 1.15 or more and 1.35 or less. This is advantageous for achieving both high exhaust purification performance and low pressure loss in the filter 10 including the on-wall layer 22.

### Density of First Support Material

When the first support material is made of a single metal oxide, a density of the metal oxide is the density P1 of the first support material. The density of the metal oxide can be measured by the method described in experimental examples described later.

The first support material may be made of two or more metal oxides. In this case, the density P1 of the first support material can be represented by a weighted average of densities of the two or more metal oxides. In other words, the density P1 of the first support material is represented by the following equation (F1). $P 1 = Σ \left({ρ}_{1 j}\times {C}_{1 j}/{C}_{1 total}\right)$ (F1)

In equation (F1), j is an integer of 1 to m (where m is an integer of 2 or more and is the number of metal oxides constituting the first support material), p₁ⱼ is a density (g/cm³) of the j-th metal oxide, Cₗⱼ is an amount (g/L) of the j-th metal oxide supported on the carrier, and C₁ₜₒₜₐₗ is an amount (g/L) of the first support material supported on the carrier.

The density P1 of the first support material is, for example, 5.40 g/cm³ or more and may be 5.50 g/cm³ or more and 8.00 g/cm³ or less, or 5.70 g/cm³ or more and 7.00 g/cm³ or less.

The density p₁ⱼ of each metal oxide constituting the first support material is, for example, 3.10 g/cm³ or more and may be 3.50 g/cm³ or more and 7.00 g/cm³ or less, or 4.00 g/cm³ or more and 6.50 g/cm³ or less, although not intended to be limiting.

In the present specification, "different metal oxides" means metal oxides having different density values measured by the method described in experimental examples. Therefore, for example, even metal oxides having the same constituent elements are treated as different metal oxides when the density values are different.

### Density of Second Support Material

When the second support material is made of a single metal oxide, a density of the metal oxide is the density P2 of the second support material. The density of the metal oxide can be measured by the method described in experimental examples described later.

The second support material may be made of two or more metal oxides. In this case, the density P2 of the second support material can be represented by a weighted average of densities of the two or more metal oxides. In other words, the density P2 of the second support material is represented by the following equation (F2). $P 2 = Σ \left({ρ}_{2 i}\times {C}_{2 i}/{C}_{2 total}\right)$ (F2)

In equation (F2), i is an integer of 1 to k (where k is an integer of 2 or more and is the number of metal oxides constituting the second support material), p₂ᵢ is a density (g/cm³) of the i-th metal oxide, C₂ᵢ is an amount (g/L) of the i-th metal oxide supported on the carrier, and C₂ₜₒₜₐₗ is an amount (g/L) of the second support material supported on the carrier.

The density P2 of the second support material is, for example, 5.25 g/cm³ or less and may be 2.50 g/cm³ or more and 5.20 g/cm³ or less, or 3.00 g/cm³ or more and 5.16 g/cm³ or less, although not intended to be limiting.

The density p₂ᵢ of each metal oxide constituting the second support material may be, for example, 2.00 g/cm³ or more and 8.00 g/cm³ or less, 2.50 g/cm³ or more and 7.00 g/cm³ or less, or 3.00 g/cm³ or more and 5.90 g/cm³ or less, although not intended to be limiting.

### Adjustment of Density

The density P1 of the first support material and the density P2 of the second support material can be adjusted by the configuration of metal oxides constituting the first support material and the second support material and, as necessary, supported amounts thereof.

When the first support material and the second support material contain, for example, at least one of the above-described Ce-containing Zr-based composite oxide, Ce-free Zr-based composite oxide, and Al-based oxide, there are differences in densities of these materials, as shown in Table 2 described later. In particular, an Al-based oxide tends to have a lower density than a Ce-containing Zr-based composite oxide and a Ce-free Zr-based composite oxide.
This is considered to be related to atomic weights of constituent elements of the materials. Therefore, by adjusting constituent elements of the materials and contents of the materials, the density P1 of the first support material and the density P2 of the second support material can be within the above ranges.

When the first support material contains a CeZr-based composite oxide, the content of the CeZr-based composite oxide in the first support material is, for example, 50 mass% or more and 80 mass% or less and is preferably 65 mass% or more and 75 mass% or less, although not intended to be limiting.

When the first support material contains a Zr-based composite oxide, the content of the Zr-based composite oxide in the first support material is 15 mass% or more and 44 mass% or less and may be 18 mass% or more and 35 mass% or less, or 25 mass% or more and 30 mass% or less, although not intended to be limiting.

The content of an Al-based oxide in the first support material is, for example, 20 mass% or less and may be 15 mass% or less, although not intended to be limiting.

As described above, an Al-based oxide tends to have a lower density. Therefore, from the viewpoint of achieving a density ratio P1/P2 of 1.05 or more, the content of the Al-based oxide in the first support material is preferably lower than the content of the CeZr-based composite oxide and the content of the Zr-based composite oxide in the first support material.

When the second support material contains a CeZr-based composite oxide, the content of the CeZr-based composite oxide in the second support material is, for example, 15 mass% or more and 60 mass% or less and may be 20 mass% or more and 56 mass% or less, or 28 mass% or more and 51 mass% or less, although not intended to be limiting.

When the second support material contains a Zr-based composite oxide, the content of the Zr-based composite oxide in the second support material is 15 mass% or more and 44 mass% or less and may be 18 mass% or more and 30 mass% or less, or 18 mass% or more and 22 mass% or less, although not intended to be limiting.

When the second support material contains an Al-based oxide, the content of the Al-based oxide in the second support material is, for example, 20 mass% or more and 70 mass% or less and may be 22 mass% or more and 65 mass% or less, or 27 mass% or more and 52 mass% or less, although not intended to be limiting.

The content of the Al-based oxide in the second support material is preferably higher than at least one of the content of the CeZr-based composite oxide and the content of the Zr-based composite oxide in the second support material.

The densities of the CeZr-based composite oxide and the Zr-based composite oxide are each specifically, for example, 4.00 g/cm³ or more and 7.00 g/cm³ or less, although not intended to be limiting. The density of the Al-based oxide is specifically, for example, 2.00 g/cm³ or more and 4.00 g/cm³ or less, although not intended to be limiting. Filter Performance

As for the exhaust purification performance of the filter 10, in terms of light-off performance measured by the method described in experimental examples described later, T50-NO may be 320°C or lower and may be 285°C or lower. T50-CO may be 310°C or lower and may be 285°C or lower. T50-HC may be 330°C or lower and may be 315°C or lower.

The pressure loss of the filter 10 may vary depending on specifications of the carrier and the catalytic layers and on the measurement method. Accordingly, although not intended to be limiting, for example, pressure loss ΔP_{R} (kPa) measured using the rig apparatus described in experimental examples described later is preferably 7.00 kPa or less, more preferably 6.00 kPa or less, and still more preferably 4.00 kPa or less.

As for PM collection performance of the filter 10, a PM collection rate measured by the method described in experimental examples described later is preferably 90% or more.

### Method for Producing Catalyzed Particulate Filter

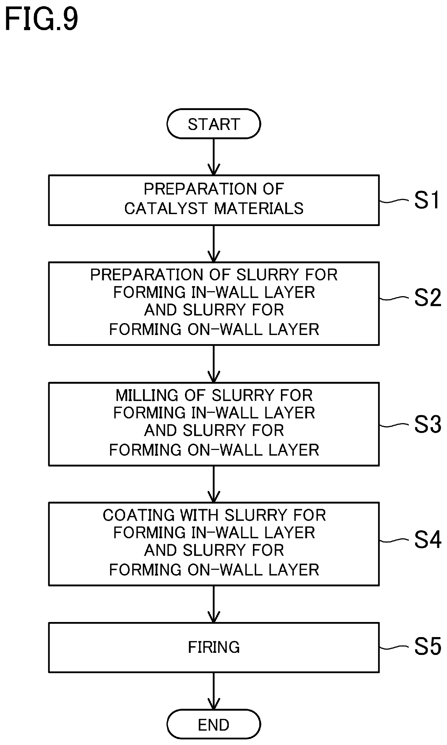

As illustrated in Fig. 9, an example of a method for producing a filter 10 includes a catalyst material preparing step S1, a slurry preparing step S2, a milling step S3, a coating step S4, and a firing step S5.

In the catalyst material preparing step S1, catalyst materials serving as materials for forming an on-wall layer 22 and an in-wall layer 24 are prepared. The catalyst materials may be commercially available products or may be produced. For example, the above-described CeZr-based composite oxide and Zr-based composite oxide can be produced by a generally known co-precipitation method or any other method. When a support material supports a noble metal catalyst, the noble metal catalyst can be supported by a generally known evaporation drying method or any other method.

In the slurry preparing step S2, a raw material of the in-wall layer 24, that is, the catalyst material to be contained in the in-wall layer 24, other components as needed, and a solvent are mixed to form a slurry for forming an in-wall layer. In addition, a raw material of the on-wall layer 22, that is, the catalyst material to be contained in the on-wall layer 22, other components as needed, and a solvent are mixed to form a slurry for forming an on-wall layer. The solvent is not particularly limited, and a typical solvent, such as ion-exchange water, used in the production of a catalyzed particulate filter can be used.

In the milling step S3, the slurry for forming an in-wall layer and the slurry for forming an on-wall layer are milled. The milling can be performed with a typical mixer such as a ball mill. In this step, the slurry for forming an in-wall layer is milled such that the mean particle diameter D50 thereof is a predetermined value, specifically, for example, 0.1 µm or more and 0.5 µm or less, preferably 0.1 µm or more and 0.4 µm or less. Thus, when the carrier 10A is coated with the slurry for forming an in-wall layer, the slurry enters the pores 16 inside the partitions and is deposited mainly on the wall surfaces 16A of the pores 16.

The slurry for forming an on-wall layer is milled such that the mean particle diameter D50 thereof is, for example, 5 µm or more and 10 µm or less, preferably 6 µm or more and 8 µm or less. Thus, when the carrier 10A is coated with the slurry for forming an on-wall layer, the slurry is less likely to enter the pores 16 inside the partitions 15 and is deposited mainly on the wall surfaces 15A of the partitions 15 facing the cells 12 and, as necessary, on the wall surfaces 15B facing the cells 13.

In the coating step S4, the carrier 10A is coated with the slurry for forming an in-wall layer and the slurry for forming an on-wall layer. Preferably, the carrier 10A is coated with the slurry for forming an in-wall layer and then coated with the slurry for forming an on-wall layer. The coating with the slurries may be performed from either the upstream end or the downstream end of the carrier 10A, but in a preferred method, the carrier 10A is coated with the slurry for forming an in-wall layer from the downstream end and then coated with the slurry for forming an on-wall layer from the upstream end. This can prevent the slurries from mixing with each other, and the on-wall layer 22 and the in-wall layer 24 can be easily formed in the respective formation areas.

After coating with the slurries, the carrier 10A is dried and fired (the firing step S5). The firing conditions are not particularly limited, and conditions used for producing a typical catalyzed particulate filter, such as 500°C for two hours, can be employed. Thus, a catalyzed particulate filter is obtained.

### Experimental Examples

Next, specific experimental examples will be described.

### Experimental Example A

Samples of catalyzed particulate filters (hereinafter also referred to as "PF samples") of Experimental Examples A1 to A12 were produced. Table 1 shows the details of the specifications of the PF samples. In Table 1, "g/L" indicates an amount of a component per 1 L of carrier volume. In Table 1, "total supported amount" is abbreviated as "total amount".

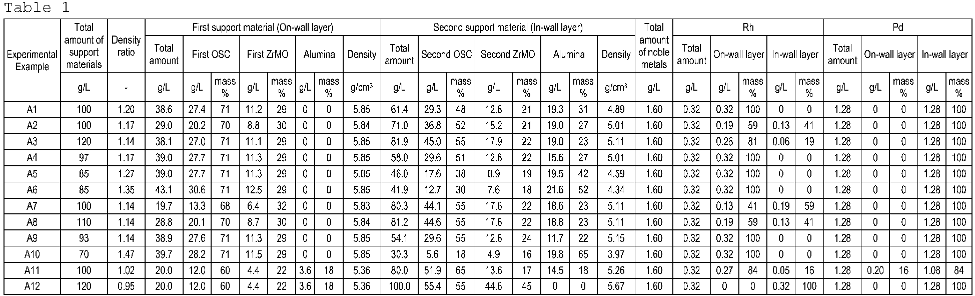

### Materials

### Carrier

As a carrier, a commercially available cordierite wall-flow type base material (volume: 1.6 L; number of cells per square inch: 300 cpsi; partition thickness: 8.5 mil; mean pore diameter D50: 15 µm) was used. The mean pore diameter D50 of the carrier is a 50% value of a pore distribution determined from three-dimensional shape data obtained by X-ray CT measurement of the carrier.

### Support Material

Table 2 shows the details of the specifications of support materials used.

**Table 2**

| Support material | | Catalytic layer | Mean particle diameter 050 | Content percentage of constituent elements | Density |
|---|---|---|---|---|---|
| | | | µm | mass% | g/cm³ |
| First OSC | CeZrNdLaYOx (CeZr-based composite oxide) | On-wall layer | 9.5 | CeO₂/ZrO₂/La₂O₃/ Nd₂O₃/Y₂O₃ = 10/75/5/5/5 | 6.00 |
| Second OSC | CeZrNdLaYOx (CeZr-based composite oxide) | In-wall layer | 8.5 | CeO₂/ZrO₂/La₂O₃/ Nd₂O₃/Y₂O₃ = 10/75/5/5/5 | 5.82 |
| First ZrMO | ZrLaYOx (Zr-based composite oxide) | On-wall layer | 9.2 | ZrO₂/La₂O₃/Y₂O₃ =85/5/10 | 5.49 |
| Second ZrMO | ZrLaYOx (Zr-based composite oxide) | In-wall layer | 2.9 | ZrO₂/La₂O₃/Y₂O₃ = 85/5/10 | 5.48 |
| First alumina | La₂O₃-Al₂O₃ (Activated alumina) | On-wall layer | 29 | La₂O₃/Al₂O₃ = 5/95 | 3.08 |
| Second alumina | | In-wall layer | | | |

The method for preparing a CeZrNdLaYOx powder of first OSC is as follows. A solution prepared by dissolving cerium nitrate hexahydrate, zirconium oxynitrate, neodymium nitrate hexahydrate, lanthanum nitrate, and yttrium nitrate in ion-exchange water was mixed with an 8-fold diluted solution of 28 mass% ammonia water and neutralized to obtain a coprecipitate. The coprecipitate was washed with water by centrifugation and then dried at 150°C in the air for a whole day and night. Subsequently, the coprecipitate was fired at 500°C for two hours in the air and pulverized with a ball mill so as to obtain the mean particle diameter D50 shown in Table 2, thereby obtaining the CeZrNdLaYOx powder.

The method for preparing a CeZrNdLaYOx powder of second OSC is as follows. An aqueous sodium sulfate solution and an aqueous zirconium oxychloride solution were heated to 95°C or higher. Subsequently, both solutions were mixed to obtain a reaction solution containing basic zirconium sulfate. The mixing of the two solutions was performed over several hours while maintaining the temperature at 95°C or higher such that an SO₄²⁻/ZrO₂ mass ratio of the reaction solution was 0.4 to 0.6. After the resulting reaction solution was cooled to room temperature, an aqueous cerium nitrate solution, an aqueous neodymium nitrate solution, an aqueous lanthanum nitrate solution, and an aqueous yttrium nitrate solution were added to the reaction solution and stirred to be uniform. The resulting mixed solution was mixed with an 8-fold diluted solution of 28 mass% ammonia water and neutralized to obtain a coprecipitate. The coprecipitate was washed with water by centrifugation, then dried at 150°C in the air for a whole day and night, and pulverized with a ball mill so as to obtain the mean particle diameter D50 shown in Table 2. Subsequently, firing was performed at 500°C for two hours in the air, thereby obtaining the CeZrNdLaYOx powder.

The method for preparing a ZrLaYOx powder of first ZrMO is as follows. A solution prepared by dissolving a zirconium oxynitrate solution, lanthanum nitrate, and yttrium nitrate in ion-exchange water was mixed with an 8-fold diluted solution of 28 mass% ammonia water and neutralized to obtain a coprecipitate. The coprecipitate was washed with water by centrifugation and then dried at 150°C in the air for a whole day and night. Subsequently, the coprecipitate was fired at 500°C for two hours in the air and pulverized with a ball mill so as to obtain the mean particle diameter D50 shown in Table 2, thereby obtaining the ZrLaYOx powder.

The method for preparing a ZrLaYOx powder of second ZrMO is as follows. A solution prepared by dissolving a zirconium oxynitrate solution, lanthanum nitrate, and yttrium nitrate in ion-exchange water was mixed with an 8-fold diluted solution of 28 mass% ammonia water and neutralized to obtain a coprecipitate. The coprecipitate was washed with water by centrifugation, then dried at 150°C in the air for a whole day and night, and pulverized with a ball mill so as to obtain the mean particle diameter D50 shown in Table 2. Subsequently, firing was performed at 500°C for two hours in the air, thereby obtaining the ZrLaYOx powder.

As the activated alumina powder serving as first alumina and second alumina, a commercially available product was used.

The density of each support material was measured by the method described later.

### Noble Metal Catalyst

Pd and Rh serving as noble metal catalysts were supported on the support materials. Specifically, in experimental examples in which the activated alumina powder was contained as a support material, Pd was supported on the activated alumina powder, and Rh was supported on the CeZrNdLaYOx powder and the ZrLaYOx powder. In experimental examples in which the activated alumina powder was not contained as a support material, Pd was supported on the CeZrNdLaYOx powder, and Rh was supported on the ZrLaYOx powder.

Each of the noble metal catalysts was supported on each support material by an evaporation drying method. Specifically, a slurry was prepared by adding ion-exchange water to a support material, and a palladium(II) nitrate solution or a rhodium nitrate solution was added thereto and stirred. Subsequently, water was completely evaporated, and firing was performed at 500°C for two hours in the air, thereby obtaining a catalyst material in which a noble metal catalyst was supported on the support material.

### Preparation of PF Sample

### Slurry for Forming In-Wall Layer

Ion-exchange water was added to the catalyst material prepared as described above and mixed to obtain a slurry. The slurry was fed into a ball mill and pulverized with zirconia beads to obtain a slurry for forming an in-wall layer, the slurry having a mean particle diameter D50 of 0.2 µm.

### Slurry for Forming On-Wall Layer

A slurry was prepared and pulverized in the same manner as the slurry for forming an in-wall layer to obtain a slurry for forming an on-wall layer, the slurry having a mean particle diameter D50 of 7 µm.

### Formation of In-Wall Layer and On-Wall Layer

The slurry for forming an in-wall layer was injected from the downstream end of the carrier and dried to form an in-wall layer on wall surfaces inside the partitions. The in-wall layer was formed so as to have a uniform thickness over the entire length of the carrier. After formation of the in-wall layer, the slurry for forming an on-wall layer was injected from the upstream end of the carrier and dried to form an on-wall layer on wall surfaces of the partitions facing cells. After formation of the on-wall layer, firing was performed at 500°C for two hours to obtain a PF sample. The on-wall layer was formed so as to have a uniform thickness over the entire length of the carrier.

### Mean Particle Diameter D50 of Material

For materials such as support materials and slurries, a 50% value in a volume-based particle size distribution measured with a laser diffraction particle size distribution analyzer was defined as the mean particle diameter D50 thereof.

### Density of Support Material (Dry Density Measurement)

The following volume measurement was performed by the constant volume expansion method. The mass of a sample subjected to the volume measurement was measured at the same time. The obtained value of the mass was divided by the value of the volume to calculate the density of the support material.

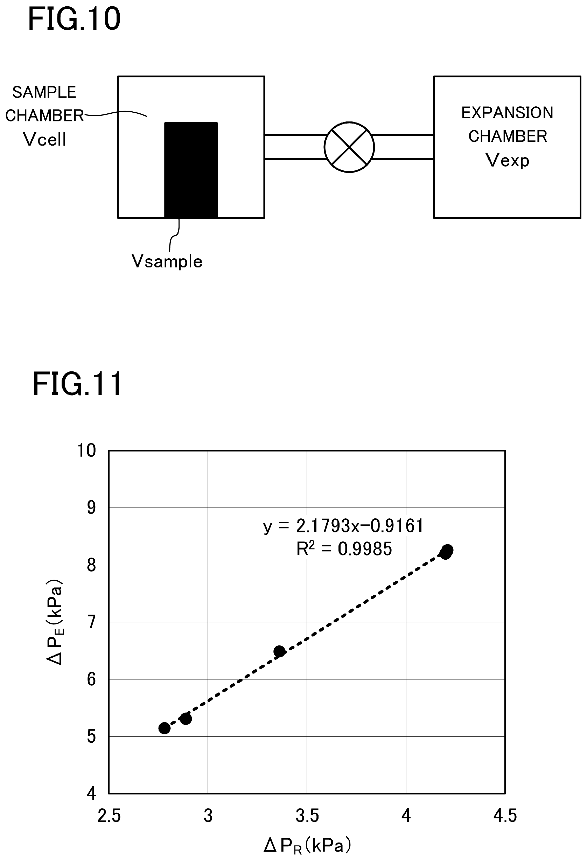

Volume measurement: As illustrated in Fig. 10, a sample with a volume Vsample is loaded into a sample chamber with a constant volume Vcell, and after a constant pressure K1 is established, a valve is opened to connect an expansion chamber with another constant volume Vexp to the sample chamber. The gas in the system expands and the pressure becomes K2. The volume is obtained from relational expression (1) of the pressure and the volume according to Boyle-Charles' law. $Vsample = Vcell - Vexp / \left(K1/K2-1\right)$ (1)

### Densities of First Support Material and Second Support Material

The density P1 of the first support material and the density P2 of the second support material were calculated using equations (F1) and (F2) above.

### Measurement of Pressure Loss

### Case of Using Rig Apparatus

Using a rig apparatus, air at a rated air volume was passed through each PF sample, and the outlet pressure was measured to determine pressure loss AP_{R} (kPa) from the differential pressure. The test air volume was based on the rated air volume, and the measurement was performed at a flow rate of 10 Nm³/min and a room temperature of 23°C ± 2°C.

### Case of Using Engine Bench

Measurement of the PM collection rate described below is performed using an engine bench. Verification was performed using the engine bench in order to confirm that the measured value of pressure loss in the case of using the rig apparatus correlates with the measured value of pressure loss in the case of using the engine bench.

Using an engine with a displacement of 2.5 L, each PF sample was mounted downstream of a three-way catalyst, and pressure loss ΔP_{E} (kPa) was determined from a differential pressure at a mass flow rate of 80 g/s.

As shown in Fig. 11, it was confirmed that there is a proportional correlation between the pressure loss ΔP_{R} and the pressure loss ΔP_{E}.

### Measurement of PM Collection Rate

The carrier was attached to an exhaust pipe of a gasoline reciprocating engine with a displacement of 2.5 L, and the engine speed and charging efficiency were set such that the gas temperature upstream of the carrier was 670°C. A PM analyzer was connected to the exhaust pipe upstream and downstream of the carrier, a PM amount X before passing through the carrier and a PM amount Y after passing through the carrier were measured, and the PM collection rate was calculated based on the following equation (2). $PM collection rate \left(%\right) = \left[\left(X-Y\right)/X\right] \times 100$ (2)

### Purification Performance Evaluation Test

Each of the PF samples of the experimental examples was attached to an exhaust pipe of an engine with a displacement of 2.5 L, the engine speed and load were set such that a catalyst temperature reached 850°C, and a bench aging treatment was performed by exposing each PF sample to exhaust of the engine for 100 hours.

From each PF sample after the bench aging treatment, a core sample with a carrier volume of approximately 25 mL (25.4 mm in diameter and 50 mm in length) was cut out and attached to a fixed-bed flow reactor. Subsequently, an evaluation test of light-off performance was conducted for the purification of HC, CO, and NO. The light-off performance is evaluated by catalyst inlet temperatures T50 (°C) at which a purification rate of HC, CO, and NO reaches 50%, and the catalyst inlet temperatures T50 are referred to as T50-HC, T50-CO, and T50-NO, respectively.

### Results and Discussion

The results of the pressure loss, PM collection rate, and purification performance evaluation obtained by the above methods are shown in Table 3, Figs. 5 to 8, and Figs. 12 to 14.

**Table 3**

| Experimental Example | Performance | | | | |
|---|---|---|---|---|---|
| | Pressure loss | PM collection rate | T50 [°C] | | |
| | kPa | % | HC | CO | NOx |
| A1 | 3.67 | 96.8 | 306 | 274 | 273 |
| A2 | 3.83 | - | 328 | 293 | 287 |
| A3 | 5.34 | - | 327 | 292 | 278 |
| A4 | 3.26 | - | 314 | 281 | 279 |
| A5 | 3.19 | - | 308 | 278 | 276 |
| A6 | 3.24 | - | 310 | 283 | 279 |
| A7 | 3.35 | 92.0 | 336 | 304 | 314 |
| A8 | 4.03 | - | 329 | 297 | 292 |
| A9 | 3.32 | - | 324 | 291 | 289 |
| A10 | 3.28 | - | 313 | 296 | 290 |
| A11 | 6.30 | 96.4 | 332 | 321 | 330 |
| A12 | 5.30 | 95.6 | 336 | 315 | 324 |

As described above, in Experimental Examples A1 to A10, in which the density ratio P1/P2 was 1.05 or more, T50-NO, T50-CO, T50-HC, and the pressure loss ΔP_{R} all decreased (refer to Table 3 and Figs. 5 to 8).

For example, referring to Fig. 5, in Experimental Example A1, the NOx purification performance was significantly improved compared with Experimental Example A11. This is probably due to synergistic effects such as that, although the total supported amount of the support materials was the same in both, in Experimental Example A1, the total supported amount of the first support material of the on-wall layer was increased, the proportions of first OSC and first ZrMO in the first support material were increased, alumina was supported only in the in-wall layer, only Rh was supported in the on-wall layer, and only Pd was supported in the in-wall layer.

Comparison among Experimental Examples A3, A7, and A8 revealed that T50-NO is improved by increasing the Rh proportion of the on-wall layer.

Comparison among Experimental Examples A1, A2, and A7 revealed that T50-NO is improved by increasing the proportion of first OSC in the first support material of the on-wall layer and increasing the proportion of alumina in the second support material of the in-wall layer.

Comparison among Experimental Examples A1, A3, and A9 revealed that T50-NO is improved by increasing the proportion of alumina in the second support material of the in-wall layer.

Comparison among Experimental Examples A1, A5, A6, and A10 revealed that T50-NO is improved by increasing the proportion of second OSC in the second support material of the in-wall layer.

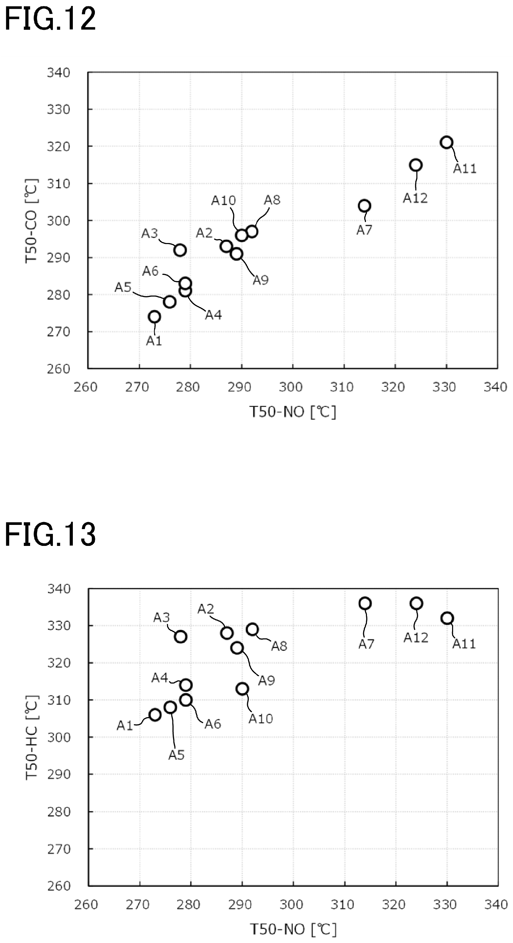

Further, Figs. 12 to 14 are graphs in which two of T50-NO, T50-CO, and T50-HC are plotted on the horizontal axis and the vertical axis. As shown in Figs. 12 to 14, it was found that, in particular, the PF samples of Experimental Examples A1 and A4 to A6 are excellent in purification performance for three components of NOx, CO, and HC.

In addition, as shown in Table 3, in Experimental Examples A1 and A7, the PM collection rate exceeded 90%, and it was found that sufficient PM collection performance can be ensured. In consideration of the catalyst configurations shown in Table 1, it can be assumed that similar PM collection performance is obtained also in Experimental Examples A2 to A6 and A8 to A10.

### Experimental Examples B to E

PF samples of Experimental Examples B1 to B3, C1 to C3, D1 to D3, E1, and E2 were produced and various tests were performed in the same manner as in Experimental Example A, except that the amounts of Rh and Pd supported were changed. Table 4 shows the details of the specifications of the PF samples. In Table 4, "g/L" indicates an amount of a component per 1 L of carrier volume. In Table 4, "total supported amount" is abbreviated as "total amount".

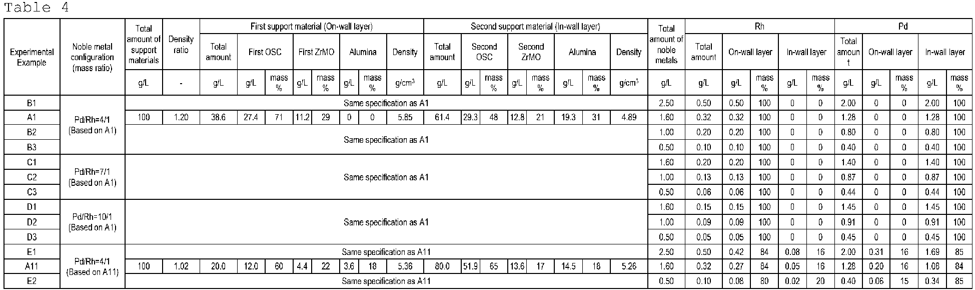

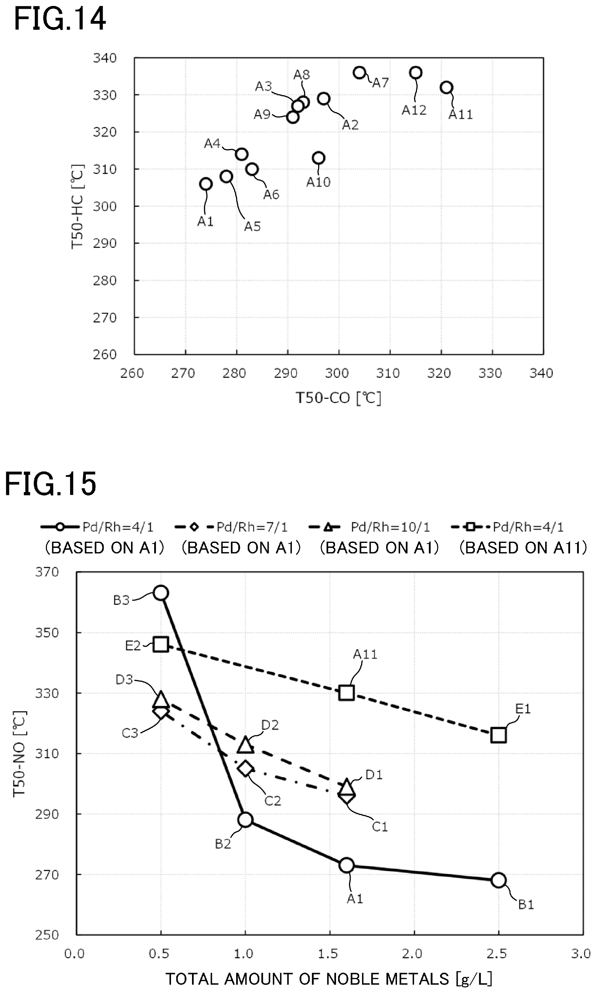

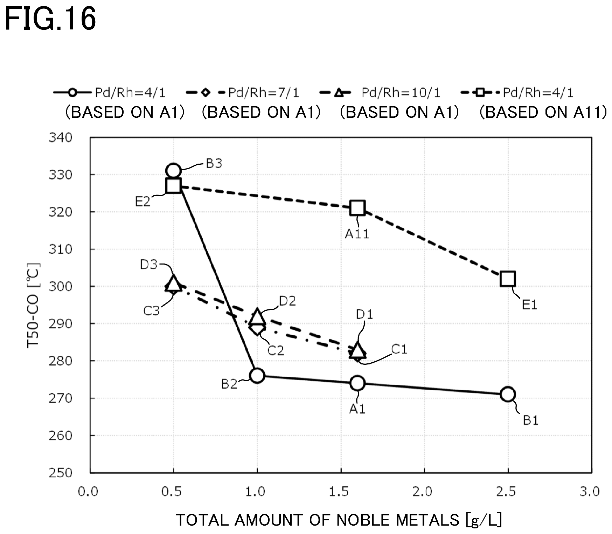

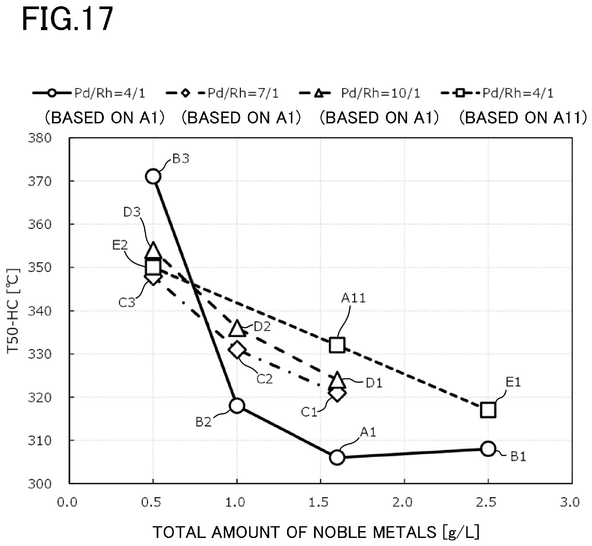

Table 5 and Figs. 15 to 17 show the results of the pressure loss, PM collection rate, and purification performance evaluation.

**Table 5**

| Experimental Example | Noble metal configuration (mass ratio) | Performance | | | | |
|---|---|---|---|---|---|---|
| | | Pressure loss | PM collection rate | T50 [°C] | | |
| | | kPa | % | HC | CO | NOx |
| B1 | Pd/Rh=4/1 (Based on A1) | 3.88 | 98.5 | 308 | 271 | 268 |
| A1 | | 3.67 | 96.8 | 306 | 274 | 273 |
| B2 | | 3.66 | 96.9 | 318 | 276 | 288 |
| B3 | | 3.89 | 98.2 | 371 | 331 | 363 |
| C1 | Pd/Rh=7/1 (Based on A1) | Equivalent to A1 | | 321 | 282 | 296 |
| C2 | | | | 331 | 289 | 305 |
| C3 | | | | 348 | 300 | 324 |
| D1 | Pd/Rh=10/1 (Based on A1) | Equivalent to A1 | | 324 | 283 | 299 |
| D2 | | | | 336 | 292 | 313 |
| D3 | | | | 354 | 301 | 328 |
| E1 | Pd/Rh=4/1 (Based on A11) | Equivalent to A11 | | 317 | 302 | 316 |
| A11 | | 6.30 | 96.4 | 332 | 321 | 330 |
| E2 | | Equivalent to A11 | | 350 | 327 | 346 |

In Experimental Examples B1 to B3, C1 to C3, and D1 to D3, the specification of the support material configuration is the same as that in Experimental Example A1 (where the density ratio P1/P2 is 1.20), and the amounts of Rh and Pd supported are changed. In Experimental Examples E1 and E2, the specification of the support material configuration is the same as that in Experimental Example All (where the density ratio P1/P2 is 1.02), and the amounts of Rh and Pd supported are changed.

As shown in Figs. 15 to 17, when the total amount of Rh and Pd supported is 0.8 g/L or more, an improvement in exhaust purification performance was observed in the PF samples of Experimental Examples B to D based on Experimental Example A1 compared with the PF samples of Experimental Example E based on Experimental Example A11.

In particular, in Experimental Examples A1, B1, and B2, the total amount of noble metals supported is 1.00 g/L to 2.50 g/L, and it is found that the purification performance for all the three components is excellent. In particular, the exhaust purification performance of Experimental Examples B2 and A1, in which the total amount of noble metals supported is 1.00 g/L and 1.60 g/L, respectively, is comparable to the exhaust purification performance of Experimental Example B1, in which the total supported amount is 2.50 g/L, suggesting that the cost can be reduced by reducing the total amount of the noble metal catalysts supported.

In addition, as shown in Table 5, in Experimental Examples B1 to B3, similar values were obtained also for the pressure loss and the PM collection rate, and it was found that low pressure loss and high PM collection performance are provided. In addition, as for Experimental Examples C1 to C3 and D1 to D3, since the support material configuration is the same as that of Experimental Example A1, it can be assumed that values comparable to those of Experimental Example A1 are also obtained for the pressure loss and the PM collection rate.

The present disclosure is extremely useful in the field of catalyzed particulate filters.

## Claims

1. A catalyzed particulate filter (10) disposed in an exhaust passage (11) of an engine and configured to collect particulate matter in exhaust, the catalyzed particulate filter (10) comprising:
a carrier (10A) having a plurality of cells (12, 13) defined by porous partitions (15);
an on-wall layer (22) that is formed on surfaces (15A, 15B) of the partitions (15) facing the cells (12, 13) and contains a first noble metal catalyst and a first support material made of one or two or more metal oxides; and
an in-wall layer (24) that is provided on wall surfaces (16A) inside the partitions (15) and contains a second noble metal catalyst and a second support material made of one or two or more metal oxides,
wherein a ratio of a density of the first support material to a density of the second support material is 1.05 or more, preferably 1.13 or more and 1.50 or less.

2. The catalyzed particulate filter (10) according to Claim 1,
wherein a total amount of the first support material and the second support material supported on the carrier (10A) is 50 g/L or more and 300 g/L or less.

3. The catalyzed particulate filter (10) according to Claim 1 or 2,
wherein an amount of the first support material supported on the carrier (10A) is 21.0 g/L or more and 50.0 g/L or less.

4. The catalyzed particulate filter (10) according to any one of Claims 1 to 3,
wherein the on-wall layer (22) contains Rh as the first noble metal catalyst.

5. The catalyzed particulate filter (10) according to Claim 4,
wherein the Rh is supported on at least part of the first support material.

6. The catalyzed particulate filter (10) according to any one of Claims 1 to 5,
wherein the in-wall layer (24) contains Pd as the second noble metal catalyst.

7. The catalyzed particulate filter (10) according to Claim 6,
wherein the Pd is supported on at least part of the second support material.

8. The catalyzed particulate filter (10) according to any one of Claims 1 to 7,
wherein the first support material does not contain an Al-based oxide.

9. The catalyzed particulate filter (10) according to any one of Claims 1 to 8,
wherein the second support material contains an Al-based oxide.

10. The catalyzed particulate filter (10) according to any one of Claims 1 to 7,
wherein at least one of the following is satisfied:
the first support material is made of a Ce-containing Zr-based composite oxide and a Ce-free Zr-based composite oxide; and
the second support material is made of a Ce-containing Zr-based composite oxide, a Ce-free Zr-based composite oxide, and an Al-based oxide.

11. The catalyzed particulate filter (10) according to any one of Claims 1 to 8,
wherein the first support material is made of two or more metal oxides having different densities, and
the density of the first support material is represented by a weighted average of densities of the two or more metal oxides.

12. The catalyzed particulate filter (10) according to any one of Claims 1 to 9,
wherein the density of the first support material is 5.40 g/cm³ or more.

13. The catalyzed particulate filter (10) according to any one of Claims 1 to 10,
wherein a metal oxide constituting the first support material has a density of 3.10 g/cm³ or more.

14. The catalyzed particulate filter (10) according to any one of Claims 1 to 11,
wherein the second support material is made of two or more metal oxides having different densities, and
the density of the second support material is represented by a weighted average of densities of the two or more metal oxides.

15. The catalyzed particulate filter (10) according to any one of Claims 1 to 12,
wherein the density of the second support material is 5.25 g/cm³ or less.
